## Europäisches Patentamt

## European Patent Office

## Office européen des brevets

(19)

(11) Veröffentlichungsnummer: **0 176 751**
**B1**

(12) **EUROPÄISCHE PATENTSCHRIFT**

(45) Veröffentlichungstag der Patentschrifft:
**17.01.90**

(21) Anmeldenummer: **85110672.4**

(22) Anmeldetag: **24.08.85**

(51) Int. Cl. 4: **B 65 G 69/00**

(54) **Verformbare Dichtung des Spaltes zwischen dem Rand einer Gebäudeöffnung und dem Heck eines an diese herangefahrenen Fahrzeuges.**

(30) Priorität: **05.09.84 DE 3432543**

(43) Veröffentlichungstag der Anmeldung:
**09.04.86 Patentblatt 86/15**

(45) Bekanntmachung des Hinweises auf die Patenterteilung:
**17.01.90 Patentblatt 90/03**

(84) Bennante Vertragsstaaten:
**AT BE CH DE FR GB IT LI LU NL SE**

(56) Entgegenhaltungen:
**DE-A-2 046 250**
**DE-A-2 635 263**

(73) Patentinhaber: **Alten, Kurt**
**Ringstrasse 14**
**D-3015 Wennigsen (DE)**

(72) Erfinder: **Alten, Kurt**
**Ringstrasse 14**
**D-3015 Wennigsen (DE)**

(74) Vertreter: **Depmeyer, Lothar**
**Auf der Höchte 30**
**D-3008 Garbsen 1 (DE)**

**Beschreibung**

Die Erfindung betrifft eine Dichtung nach dem ersten Teil des Patentanspruches. Eine solche Dichtung gehört zum Stand der Technik.

Bei bekannten Dichtungen dieser Art sind die Streifen mit einem Seilzug verbunden, der sich auf kürzestem Wege von dem Rand des einen Streifens zum benachbarten Rand des anderen Streifens erstreckt. Abgesehen davon, dass bei derart angeordneten Seilzügen die elastische Eindrückung des einen Streifens von derjenigen des anderen Streifens abhängig ist, besteht der Wunsch, noch längere Federn bzw. Seilzöge zu erhalten, um eine noch flachere Federkennung zu erzielen.

Demgemäss liegt der Erfindung die Aufgabe zugrunde, die eingangs erwähnten Dichtungen so zu verbessern, dass bei unabhängig für die beiden Streifen wirkenden Seilzügen und bei geringer Tiefe der Dichtung ( Abstand des U-förmigen Rahmens vom Gebäude ) eine noch weichere Eindrückung der Streifen erreicht wird.

Diese Aufgabe wird gemäss der Erfindung durch die kennzeichnenden Merkmale des Anspruchs erreicht.

Die Seilzüge sind nunmehr voneinander unabhängig. Dennoch können sie eine sehr grosse Länge erhalten.

Um eine solche Anordnung der Federzüge nutzen zu können, werden vorzugsweise im oberen Teil der Dichtung Umlenkrollen vorgesehen, die um eine senkrechte Achse verschwenkbar sind, damit eine gute Federung unabhängig von der Schwenkstellung bzw. Verformung der seitlichen Streifen möglich ist. Dabei ist es auch möglich, die Federspannung so einzustellen, dass diese das Gewicht des frei herausragenden Teils der Streifen praktisch trägt, um so eine besonders günstige Verformung der Streifen beim Auftreffen des Fahrzeuges erreichen zu können. Es werden so auch unerwünschte Verzerrungen der seitlichen Streifen ausgeschaltet, die sich unter der Wirkung des Eigengewichtes der Streifen einstellen können.

Weitere Einzelheiten der Erfindung werden anhand der Zeichnung erläutert, in der ein Ausführungsbeispiel der Erfindung dargestellt ist. Es zeigen:

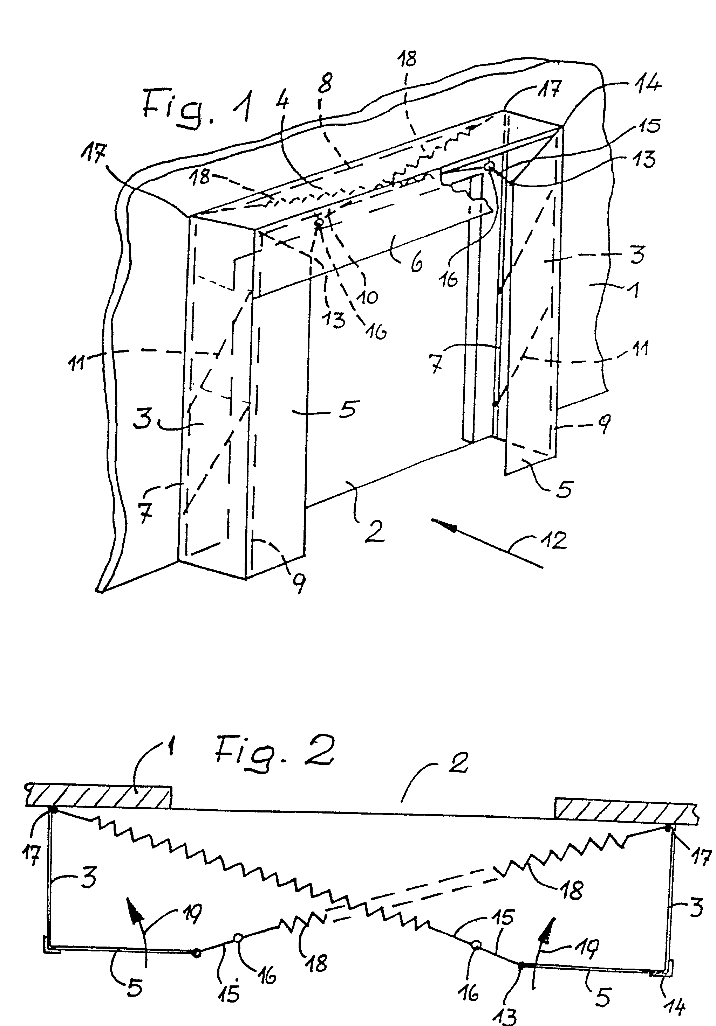

Fig. 1     eine Dichtung am Rand einer Gebäudeöffnung in schaubildlicher Darstellung und

Fig. 2     eine Draufsicht auf die Dichtung nach Fig. 1 unter Weglassung der oben gelegenen Abdeckung der Dichtung.

Ein Lagerhaus bzw. ein Gebäude 1 hat eine Öffnung 2, an die Fahrzeuge mit dem Heck voran zum Be- und Entladen herangefahren werden können. Zu beiden Seiten der Öffnung 2 befindet sich eine senkrecht verlaufende Bespannung 3 und darüber in waagerechter Anordnung eine Querbespannung 4. Diese Bespannungen stellen vom Gebäude 1 her eine Verbindung her zu einer Schürze mit einem senkrechten Streifen 5 zu beiden Seiten der Öffnung 2 und einem oben gelegenen Querteil 6. Die Teile 3 - 6 bestehen aus einer biegsamen wasserdichten, abriebfesten Folie.

Die Öffnung 2 ist von einem u-förmigen Rahmen umschlossen, der von senkrechten Schenkeln 7 und einem Steg 8 gebildet ist. Diese als Metallprofile ausgeführten Teile sind fest mit dem Gebäude 1 verbunden und dienen zur Befestigung der Ränder der Bespannung 3 und der Querbespannung 4, die dem Gebäude 1 abgekehrten Ränder der Bespannung 3, 4 stehen mit einem weiteren Rahmen in u-förmiger Gestalt in fester Verbindung. Seine senkrechten Schenkel sind mit 9 und sein Steg ist mit 10 bezeichnet. Zur Halterung und rückläufigen Führung des vorderen Rahmens dienen schräge Lenker 11. Die Richtung, mit der die Fahrzeuge an die Öffnung 2 herangefahren werden, ist mit 12 bezeichnet.

Das Querteil 6 ist so ausgeführt, dass es die oberen Enden 13 der Streifen 5 überdeckt. Diese Enden befinden sich also hinter dem Querteil 6. Befestigt sind die beiden Streifen 5 seitlich aussen an ihren Rändern; demgemäss können sie beim Auftreffen eines Fahrzeuges eine türartige Bewegung in Richtung auf das Gebäude 1 ausführen. Diese Bewegung und die damit verbundene Verformung der Streifen 5 wird jedoch von einem Federzug beeinflusst.

Die oberen Enden der beiden Streifen 5 sind abgeschrägt, wobei die innere Kante 13 tiefer liegt als die befestigte, äussere Kante 14.

An der Kante 13 greift ein Seilzug 15 an, der über 5 eine Rolle 16 geleitet ist, die um eine senkrechte Achse verschwenkbar ist. Die Befestigung erfolgt im Bereich des Steges 10. Der Seilzug ist dann in Richtung auf die schräg gegenüberliegende, am weitesten entfernt liegende innere Ecke der Dichtung verlegt und dort befestigt. Die Ecke ist mit 17 bezeichnet. Die möglichst lange, zum Seilzug gehörige Zugfeder ist mit 18 bezeichnet; es versteht sich dass insgesamt zwei Seilzüge mit zwei Zugfedern 18 vorgesehen sind. Die den beiden Streifen 5 zugeordneten Seil-bzw. Federzüge liegen über Kreuz, um so für beide Streifen 5 eine weiche Federung mit flacher Kennung zu erreichen, damit die Reaktionskräfte beim Einklappen der Streifen in Richtung der Pfeile 19 sich möglichst wenig verändern. Zugleich sind die Zugfedern 18 so bemessen, dass sie das Gewicht des frei schwenkbaren Teils der Streifen 5 tragen. Aus diesem Grunde verlaufen die Seilzüge 15 von der Kante 13 aus steil nach oben.

Die Seilzüge 15 insb. aber deren Zugfedern 18 beschreiben mit der Gebäudefront bzw. mit dem quer verlaufenden Steg 10 einen Winkel von etwa 10 - 20°. Dadurch ergibt sich die gewünschte grosse Wirklänge. Darüber hinaus ist es möglich, bei breiteren Dichtungen zwischen den beiden Rollen 16 einen geradlinig verlaufenden Seil- und Federzug anzuordnen und zwar so dass die zugehörige Feder genau parallel zum Steg 10 verläuft.

## Patentanspruch

Verformbare Dichtung des Spaltes zwischen dem Rand einer Gebäudeöffnung (2) und dem Heck eines an diese herangefahrenen Fahrzeuges mit einer Schürze (5, 6), die seitlich und oben an einem starren, im Abstand von dem Gebäude (1) befindlichen, in Richtung auf das Gebäude (1) bewegbaren, unten offenen zu beiden Seiten und oben über eine Bespannung (3, 4) mit dem Gebäude (1) in Verbindung stehenden, u-förmigen Rahmen befestigt ist, wobei die Schürze aus einem oberen, am waagerechten Steg (10) des Rahmens befestigten Querteil (6) und zwei mit ihren seitlich aussen gelegenen Rändern an den senkrechten Schenkeln (9) des Rahmens befestigten Streifen (5) besteht, den Streifen (5) ein oben an ihrem inneren Rand angreifender, federnder Seilzug (15) (Feder mit Seilzug) zugeordnet ist, gegen dessen Wirkung die Streifen (5) elastisch nachgiebig, türartig verformbar sind und weiterhin der Seilzug (15) mit dem waagerechten Steg (10) einen Winkel bildet, der kleiner ist als 45° (Winkelmessung bei Draufsicht), dadurch gekennzeichnet, dass zwei Seilzüge (15) für die Streifen (5) vorhanden sind, die sich kreuzen und sich jeweils in die gegenüberliegende, am weitesten von dem zugehörigen Streifen (5) entfernt liegende Ecke (17) der Dichtung erstrecken.

## Claim

Deformable seal for sealing the gap between the edge of a building aperture (2) and the rear of a vehicle, which has been driven up to said aperture, comprising an apron (5, 6), which is mounted at its sides and upper end on a rigid, U-shaped frame, which is spaced from the building (1), is displaceable in the direction of the building (1), is open at its lower end and is joined to the building (1) by a covering (3, 4) at both sides and at the upper end, the apron comprising an upper crosspiece member (6), which is mounted on the horizontal web (10) of the frame, and two strips (5), which are mounted on the vertical legs (9) of the frame by means of their lateral outer edges, a resilient cable (15) (spring with cable) is associated with the strips (5) and engages with their inner edge at its upper end, the strips (5) being deformable in an elastically resilient, door-like manner in opposition to the action of said cable, and, in addition, the cable (15) forms with the horizontal web (10) an angle which is less than 45 (angular measurement when viewed from above), characterised in that two cables (15) are provided for the strips (5), they intersect one another, and they each extend into the opposite corner (17) of the seal situated the furthest away from the associated strip (5).

## Revendication

Dispositif d'étanchéité déformable de la fente entre le bord d'une baie d'un bâtiment (2) et l'arrière d'un véhicule qui en est rapproché, comprenant une jupe (5, 6) qui est fixée latéralement et en haut à un cadre rigide en forme de U, se trouvant à distance du bâtiment (1), mobile dans la direction du bâtiment (1), ouvert en bas et relié au bâtiment (1) des deux côtés et en haut par un entoilage (3, 4), la jupe étant constituée d'une partie transversale supérieure (6) fixée à l'âme horizontale (10) du cadre et de deux bandes (5) fixées par leurs bords extérieurs latéraux aux branches verticales (9) du cadre, une commande par câble (15) (ressort avec câble), élastique et attaquant en haut par son bord intérieur, étant associée aux bandes (5) lesquelles peuvent, à l'encontre de son action, être déformées en cédant élastiquement à la manière d'une porte, la commande par câble (15) faisant avec l'âme horizontale (10) un angle inférieur à 45°, caractérisée en ce qu'il est prévu, pour les bandes (5), deux commandes par câble (15) qui se croisent et qui s'étendent chacune vers le sommet (17) opposé du dispositif d'étanchéité, le plus éloigné de la bande associée (5).

Fig. 1

Fig. 2